# EUROPEAN PATENT SPECIFICATION

(11) **EP 2 397 719 B1**
(45) Date of publication and mention of the grant of the patent: **17.04.2013**
(21) Application number: 10166104.9
(22) Date of filing: 16.06.2010
(51) Int. Cl.: F16D 69/02, F16D 65/02, F16D 69/00

(54) **Brake pads for improved wet braking performance**
Bremsbeläge mit verbesserten Nassbrems-Eigenschaften
Garniture de frein à action améliorée à l'humidité

(43) Date of publication of application: 21.12.2011
(73) Proprietor: Brembo SGL Carbon Ceramic Brakes GmbH, 86405 Meitingen (DE)
(72) Inventor: Scheppach, Jürgen, 89331, BURGAU (DE)
(74) Representative: Deckers, Hellmuth Alexander

(56) References cited:
- WO-A1-84/01412
- DE-A1- 2 539 557
- US-A- 6 139 413
- US-B2- 6 766 884

## Description

### Field of the Invention

The invention relates to brake pads for improved wet braking performance.

### Background of the Invention

Under wet conditions, a liquid film builds up on the surfaces of the brake disk and the brake pads which film acts as a lubricant in the brake system. In the patent application DE 103 56 504 A1, a method is disclosed for wiping brake disks of a motor vehicle by pressing the brake pads with a low pressure onto the brake disk to remove the liquid film. Wiping is controlled by a set of rules which determine the probability of occurrence of a brake process, and will be done once the probability exceeds a predetermined value.

Similar methods of wiping or cleaning the surface of a brake disk have been disclosed in DE 199 16 700 where brake pads are pressed onto a brake disk with low pressure in arbitrarily selected intervals, in DE 199 47 903 where the brake system comprising brake pads and a brake disk is automatically activated from time to time without notable deceleration of the vehicle, in DE 198 46 392 where depending on the extent of wetness on a brake system, an automatic drying function is activated which brings the brake pads into contact with the brake disk in a way that does not lead to deceleration of the vehicle. A porous material is described in EP 1 301 727 B1 which is a part of the covering for a disk brake system for aircraft. This porous material will absorb liquids such as de-icing and cleaning liquids, which liquids will then be vapourised by the heat generated during braking.

It has been found that regular or occasional pressing of brake pads against the brake disk to remove the liquid film built up on the disk surface leads to additional wear, while controlled additional braking processes with low braking pressure requires elaborate sensing and control mechanisms, and even these, strongly relying on anticipating whether a future brake process will occur at all, and when, cannot make sure that the liquid film will always be removed before a real brake process.

### Summary of the Invention

It was the object of this invention, therefore, to provide a simple, effective and efficient means of disrupting the liquid film from the brake system which acts only when it is needed, and always when it is needed, without resort to complicated electronic controls and sensors.

This object has been realised by an insert into the brake pad which insert is formed of a densified temperature-resistant fibre-containing material, and which insert radially extends over at least 50 % of the friction path, or the radial extension of that brake pad.

It is believed that the fibres present in the insert disrupt the otherwise even surface of the liquid film that forms between the brake disk and the brake pad, which leads to a mixed state of friction comprising both a hydrodynamic gliding with very low coefficient of friction in the area of contact between the non-modified part of the brake pad and the brake disk, and friction contact between brake disk and the insert within the brake pads which generates heat dissipation in the friction zone that suffices to vapourise at least a part of the liquid, thus initiating a self-accelerating process.

The densified fibre material is preferably made from carbon fibres, silicon carbide fibres, silicon nitride fibres, refractory oxide fibres such as aluminum oxide fibres and zirconium dioxide fibres, and also, high melting glass fibres and metal fibres of whiskers. "High melting" means here such materials that have a melting or softening temperature preferably in excess of 500 ºC, and particularly preferred, in excess of 700 ºC. Densification can be effected by textile processes such as layering, weaving, braiding, knitting, and felting, or formation of spun bonds from the melt. Another method of densification is formation of a fibre reinforced thermoplastic or thermoset material, which may also be carbonised by subjecting the fibre-reinforced thermoplastic or thermoset material to temperatures of from 700 °C to 1300 °C under exclusion of oxidising agents. While fibre-reinforced thermoset materials may also be used as inserts as such, fibre-reinforced thermoplastic materials are preferably carbonised before use as inserts due to the limited thermal stability of a thermoplastic material.

### Detailed Description of the Preferred Embodiments

The insert of densified fibre material is preferably added after fixing the brake pad material to the backing plate. Fixing may be effected by an adhesive having sufficient temperature resistance. It is, however, also possible to add the insert into the mould that accommodates the brake pad material to be press moulded. Due to mutual interpenetration, this latter process leads to improved cohesion within the brake pad.

While this latter process is preferred in an OEM environment, subsequent modification of a brake pad with the insert according to the invention is done by cutting or milling a recess into the brake pad material to accommodate the insert of densified fibre material.

This insert may have various geometries, such as a linear strip having a rounded or angular "U" or " 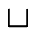 " shape or "V" shape in section, more than one such linear strip, a multitude of such linear strips which are in direct contact with each other, and adjacent strips include angles different from 0°, or circular or ellipsoidal or otherwise curved inserts. Needless to say, linear inserts are easiest to apply to ready-made brake pads for subsequent modification, by cutting or milling a groove having the desired shape in section into the brake pad material, while more elaborate geometrical forms can advantageously be realised by placing the insert into the press mould where the brake pad is formed.

The position of the insert is preferably selected near the leading edge of the brake pad, where the leading edge is defined as that edge that is first in contact with a fixed point on the surface of the brake disk when it is in forward rotation. An insert is considered to be near the leading edge if the insert or the part of it which is first on contact with a radius on the surface of a brake disk is within the first 30 % of the way a fixed point of that radius on the surface of the brake disk when it is in forward rotation travels over the brake pad.

The width of the groove on the surface of the brake pad is preferably between 3 mm and 12 mm, particularly preferably between 4 mm and 11 mm, and especially preferred, between 5 mm and 10 mm.

The groove is preferably in radial direction, with the brake pad affixed in its work position, and the radius going through the axis of rotation of the brake disk. It is also possible to orient the groove so that it encloses an angle of between - 45° and + 45° with the radius going through its centre, preferably the angle is between -30° and + 30°, and particularly preferred, between - 15° and + 15°.

The insert of densified fibre material is preferably made from carbon fibre felt, where both hard and soft (resilient) felts may be used, or from a braided structure of carbon fibres that also may have some elasticity. Layers of woven cloth of carbon fibres which are preferably affixed to each other may also be used. A densified fibre material preferably has a density of from 50 kg/m³ to 500 kg/m³.

If carbon fibres are used for the insert, the densified fibre material of the insert is preferably treated with an agent to protect the fibres from oxidation. One such method has been described in EP 0 619 801, where a composition is described which mainly contains a mixture of phosphates, of silica, and of alumina, and which forms mixed oxides belonging to the P₂O₅ - Si0₂ - Al₂O₃ system; this composition may be used for impregnation of the insert and may, after drying, be heat treated at a temperature that is sufficient at least to transform the mixed oxides into an insoluble cement capable of forming a self-healing glass.

In the experiments underlying this invention, it has been found that mixtures containing at least one of Al, B, Mg, P, Si and Zn compounds can be used as protection against oxydation for the densified fibre materials. It is preferred to use mixtures comprising at least two compounds of the said elements, preferably selected from the group consisting of aluminium phosphate, boric acid, zinc and aluminium phosphates, sodium silicate or freshly precipitated silicic acid. Preferred are mixtures that form homogeneous aqueous solutions which are slightly alkaline or slightly acidic in most cases.

In a preferred embodiment of the invention, a coating is formed on the individual fibres or filaments, by applying a liquid mixture or a powdery mixture containing at least one of Al, B, Mg, P, Si and Zn compounds, preferably at least two of the said elements, where the liquid mixture is preferably made as an aqueous solution, onto the fibres or filaments by dipping into, or spraying of, a liquid mixture, or by powder deposition in a fluidised bed or electrostatic powder deposition. A liquid mixture or solution is dried on the fibres or filaments, and the liquid or powder coated fibres are then heat treated to form glassy phases of the compounds coated onto the fibres or filaments by tempering.

It is preferred to impregnate the densified fibre materials with such aqueous solutions and then subject the impregnated densified fibre materials to a heat treatment to form glassy phases of the compounds present in the impregnant upon drying and tempering. Impregnation is preferably performed on a fibre material densified by textile processes such as layering, felting, weaving, knitting, and braiding, as a non-woven structure, or on a porous carbon fibre reinforced carbon ("CFC") material made by carbonising a fibre reinforced thermoplastic or thermoset material. Drying and heating subsequent to impregnation forms the glassy coating on the fibres or glassy claddings in the pores of the CFC material.

This combination of coating or impregnation and subsequent heat treatment is hereinafter referred to as "antioxydative treatment".

Other fibre materials as mentioned supra may also be used in any of these said forms. A preferred material that can particularly conveniently be used in conjunction with brake disks made from carbon fibre reinforced silicon carbide ceramics is a felt from silicon carbide fibres which can be prepared from a carbon fibre felt by treatment with gaseous silicon to increase the thermal and oxidation resistance of the carbon fibres. It is also possible to use the oxidation protection mentioned supra for such fibres, as well.

If a fibre-reinforced thermoset material or a fibre-reinforced carbon material are used as inserts, as mentioned supra, it is preferred that the carbon fibres have a preferential orientation which is perpendicular to the friction surface of the brake pad, or of the friction surface of the brake disk which cooperates with the brake pad in the friction coupling. Preferential orientation perpendicular to the friction surface in the context of this invention means that the average orientation encloses an angle of not more than 45° with a normal on the said friction surface. A convenient method of making such strips or inserts is by extrusion of short-fibre reinforced thermoplastic or thermoset material and cutting the extrudate in a plane perpendicular to the flow lines. Short fibres are fibres with an average length of preferably from 0.2 mm to 10 mm.

Such preferred orientation is also possible when using carbon fibre felts with an anisotropic fibre orientation. In this case, the inserts are cut from the felt in a way that this preferential orientation of the fibres with an average orientation angle of less than 45° with respect to the normal on the friction surface of the brake pad is obtained.

It has been found that this preferential orientation leads to a longer service life of such inserts, compared to those having isotropic orientation, or fibre orientation parallel to the friction surface.

When carbon fibres or carbon fibre products such as cloth, braids, or felt are used, it is preferred to use fibres having a diameter of from 3 µm to 12 µm, particularly preferably from 4 µm to 10 µm.

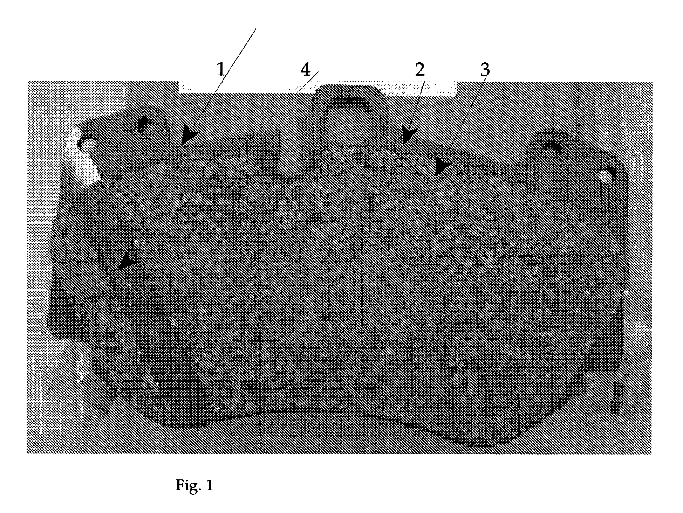

The invention is further explained with the attached figures. These show in
- Fig.1: a top view onto a brake pad equipped with a strap of carbon fibre material,

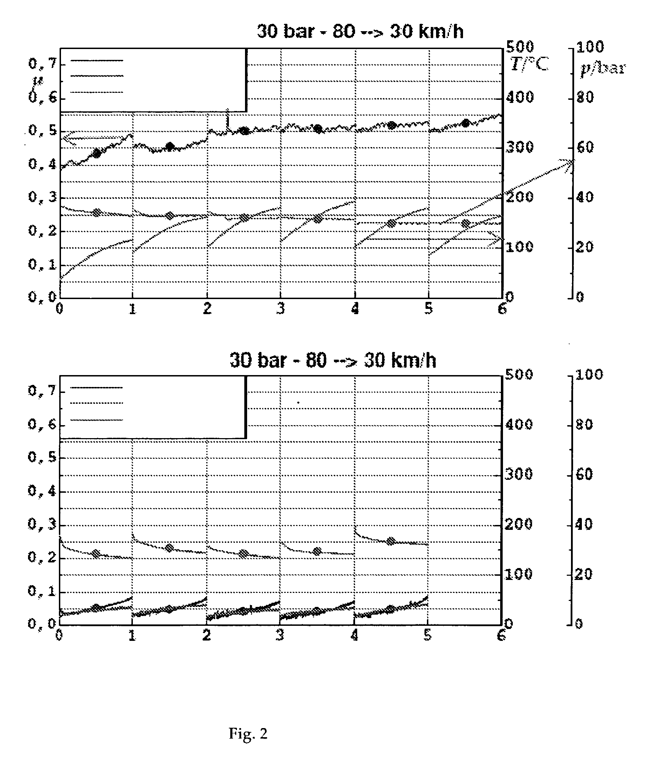

- Fig. 2: the time dependence of the coefficient µ of dynamic friction, the brake pressure *p*,and the surface temperature T measured on the brake disk in the friction path, for a dry (upper graph) and a wet (lower graph) brake process with the same brake disk and a standard (non-modified) brake pad, and

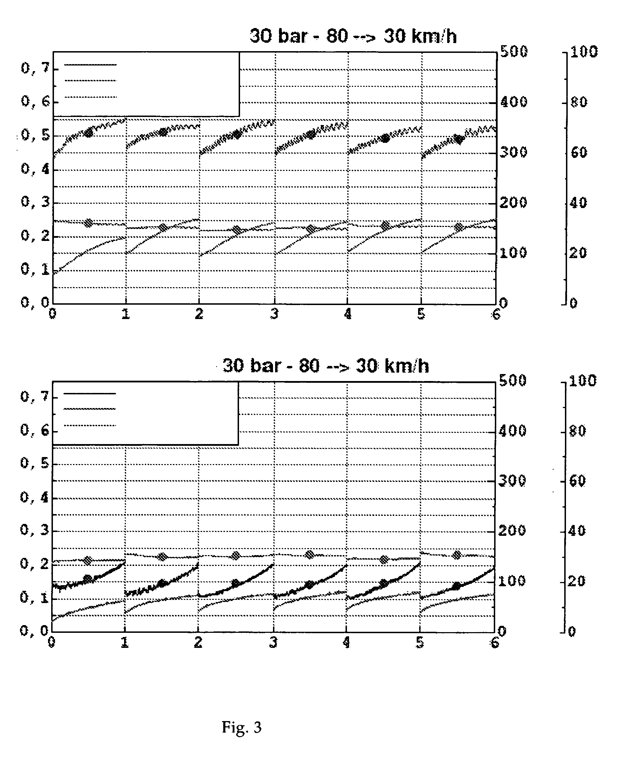

- Fig. 3: the time dependence of the coefficient µ of dynamic friction, the brake pressure ***p,*** and the surface temperature **T** measured on the brake disk in the friction path, for a dry (upper graph) and a wet (lower graph) brake process with the same brake disk and a modified brake pad according to the invention.

In Fig. 1, a brake pad 1 according to the invention is shown, which comprises a back plate **2**, a friction lining **3**, and a carbon felt strip **4** as insert in the friction lining **3** of the brake pad **1**. The insert is located near the leading edge of the friction lining in the brake pad, the direction of rotation is such that the left edge of the friction lining as shown in Fig. 1 is touched first.

Fig. 2 shows the brake performance (from top to down, Coulombic dynamic friction coefficient µ, for a non-modified brake pad which is a commercial material) under dry (top graph) and wet conditions (bottom graph), and also, surface temperatures *T* on the brake disk surface friction zone, and pressure ***p*** of the brake fluid, and

Fig. 3 shows the brake performance (from top to down, Coulombic dynamic friction coefficient µ, for a modified brake pad (according to the invention, commercial material with an inserted carbon felt strip)) under dry (top graph) and wet conditions (bottom graph).

In figures 2 and 3, the same axis denominations apply as those given in the top graph of Fig. 2 apply to all graphs shown.

The invention is further illustrated by the Examples as follows:

### Example 1 (comparative)

A vehicle was equipped with a carbon ceramic brake at the front axle. The brake disks of the front axle were carbon fibre-reinforced brake disks having a diameter of 380 mm, and a thickness of 38 mm. Brake pads sold by TMD Friction GmbH were used, with the designation "P40-3V".

Two sets of braking tests were done, one with dry conditions, as visualised in the top graph of Fig. 2 with a Coulomb coefficient of dynamic friction of between 0.44 and 0.52. It can also be seen that after reaching the temperature range of between 100 °C and 170 °C, there is only little variation in the braking performance as evidenced by the values for the dynamic coefficient of friction.

In the wet case (lower graph in Fig. 2, brake disk constantly rinsed with water, 0.251/min per friction surface and starting at least 3 minutes before initiation of the first brake process), the dynamic coefficient of friction goes down to a level of 0.05.

In both cases the pressure of the brake fluid was kept constant at 3 MPa (30 bar = 30 x 10⁵ Pa). The area of the pistons in the brake cylinders was 29.56 cm². The mass of the car including driver and equipment was 1950 kg. A speed of 80 km/h was chosen before initiation of the brake process. During this process the car was decelerated to a speed of 30 km/h. The car was then accelerated again to 80 km/h, and a new brake process was initiated.

It can be seen from this test that the coefficient of dynamic friction goes down from its average value of 0.48 to about 10 % of this value, 0.05. This means a marked reduction of braking efficiency.

### Example 2 (according to the invention)

Modified brake pads were used in the same setup, where a U-shaped, edged groove of 10 mm width was milled in radial direction (angle with respect to a radius through the centre of the groove is 0°), with a distance from the leading edge of 15 mm. This groove was filled with a strip of carbon felt which was fixed with heat resistant glue to the base plate and the edges of the groove. The carbon felt (Sigratherm® MFA, SGL Carbon GmbH) had a density of 200 kg/m³ and a fibre diameter of 6 µm.

Using the same conditions as detailed in Example 1, the dry braking experiment yielded an average value for the dynamic coefficient of friction of 0.5 (0.49 to 0.51), which is no change with respect to Example 1. In the wet test, the braking efficiency was dramatically improved, with an average value of 0.14 for the dynamic coefficient of friction, with a scatter from 0.16 to 0.14. Compared to Example 1, the improvement in braking efficiency as measured by the dynamic coefficient of friction is a factor of about 3. The increase in the dynamic coefficient of friction also contributes to a higher surface temperature of the brake disk (an average of 60 °C in Example 2, compared to an average of 30 °C in Example 1), which is, however, not sufficient to contribute to vapourisation of water off the brake disk surface and brake pad surface. The effect of increased dynamic coefficient of friction is therefore solely attributable to the modification of the brake pads by adding the strap of densified fibre material.

This example was repeated with a carbon felt strip which had been impregnated with a solution of sodium aluminium sulphate, sodium dihydrogen phosphate, sodium silicate and sodium metaborate. The impregnated carbon felt was dried and tempered at 150 °Cbefore cutting to size and inserting into the groove. The effect on wet braking was substantially the same as with non-impregnated carbon felt.

Similar improvements of the dynamic coefficient of friction have also been found when using cast iron brake disks.

## Claims

1. A brake system comprising a brake disk and at least one brake pad, **characterised in that** the brake pad has an insert formed of a densified temperature-resistant fibre-containing material, which insert radially extends over at least 50 % of the radial extension of that brake pad.

2. The brake system of claim 1 wherein the densified fibre material is made from carbon fibres, silicon carbide fibres, silicon nitride fibres, refractory oxide fibres selected from the group consisting of aluminum oxide fibres and zirconium dioxide fibres, and also, high melting glass fibres and metal fibres or whiskers.

3. The brake system of claim 1 or claim 2 wherein the densified fibre material is densified by textile processes selected from the group consisting of layering, weaving, braiding, knitting, and felting, and formation of spun bonds from the melt.

4. The brake system of claim 1 or claim 2 wherein the densified fibre material is formed of a fibre reinforced thermoplastic or thermoset material.

5. The brake system of claim 4 wherein the densified fibre material is carbonised by subjecting the fibre-reinforced thermoplastic or thermoset material to temperatures of from 700 °C to 1300 °C under exclusion of oxidising agents.

6. The brake system of one or more of claims 1 to 5 wherein the densified fibre material has been subjected to an antioxydative treatment.

7. The brake system of claim 6 wherein the antioxydative treatment consists in the formation of a coating on the individual fibres or filaments, by applying a liquid mixture or a powdery mixture containing at least one of Al, B, Mg, P, Si and Zn compounds, where the liquid mixture is made as an aqueous solution, onto the fibres or filaments by dipping into, or spraying of, a liquid mixture, or by powder deposition in a fluidised bed or electrostatic powder deposition, where in the case of a liquid mixture or solution, the liquid is dried on the fibres or filaments, and the liquid or powder coated fibres are then heat treated to form glassy phases of the compounds coated onto the fibres or filaments by tempering.

8. The brake system of claim 6 wherein the antioxydative treatment consists in impregnation of the densified fibre materials with aqueous solutions containing at least one of Al, B, Mg, P, Si and Zn compounds, and then subjecting the impregnated densified fibre materials to a heat treatment to form glassy phases of the compounds present in the impregnant upon drying and tempering.

9. The brake system of one or more of claims 1 to 8 wherein the densified fibre material is inserted after fixing the brake pad material to the backing plate, wherein a groove is cut into the brake pad material to accommodate the insert of densified fibre material.

10. The brake system of claim 9 wherein at least one edge of the groove is within the first 30 % of the way a fixed point on the surface of the brake disk when it is in forward rotation travels over the brake pad.

11. The brake system of claim 9 wherein the width of the groove is between 3 mm and 12 mm.

12. The brake system of claim 9 wherein the groove is in radial direction, with the brake pad affixed in its work position, and the radius going through the axis of rotation of the brake disk. It is also possible to orient the groove so that it encloses an angle of between - 45° and + 45° with the radius going through its centre.

13. The brake system of one or more of claims 1 to 8 wherein the insert is placed into a mould and formed together with the material or mixture of materials making up the brake pad under application of pressure and heat.

14. The brake system of any of the preceding claims wherein the carbon fibres in the inserts have a preferential orientation which is perpendicular to the friction surface of the brake pad, or of the friction surface of the brake disk which cooperates with the brake pad in the friction coupling.

15. The brake system of claim 1 wherein in the insert of densified fibre material, the fibres have a diameter of from 3 µm to 12 µm.

## Patentansprüche

1. Bremssystem, eine Bremsscheibe und mindestens einen Bremsbelag umfassend, **dadurch gekennzeichnet, dass** der Bremsbelag einen Einsatz aufweist, der aus einem verdichteten, temperaturbeständigen, faserhaltigen Material gebildet ist, wobei sich der Einsatz radial über mindestens 50 % der radialen Erstreckung des Bremsbelags erstreckt.

2. Bremssystem nach Anspruch 1, wobei das verdichtete Fasermaterial aus Kohlefasern, Siliziumcarbidfasern, Siliziumnitridfasern, feuerfesten Oxidfasern, die aus der Gruppe ausgewählt sind, die aus Aluminiumoxidfasern und Zirkoniumdioxidfasern besteht, und außerdem aus Glasfasern mit hohem Schmelzpunkt und Metallfasern oder Whiskern hergestellt ist.

3. Bremssystem nach Anspruch 1 oder 2, wobei das verdichtete Fasermaterial durch Textilverarbeitungsvorgänge verdichtet wird, die aus der Gruppe ausgewählt sind, die aus Schichten, Weben, Flechten, Wirken und Filzen besteht, und durch Bilden von Spinnvlies aus der Schmelze.

4. Bremssystem nach Anspruch 1 oder 2, wobei das verdichtete Fasermaterial aus einem faserverstärkten thermoplastischen oder wärmehärtenden Material gebildet ist.

5. Bremssystem nach Anspruch 4, wobei das verdichtete Fasermaterial karbonisiert wird, indem das faserverstärkte thermoplastische oder wärmehärtende Material unter Ausschluss von Oxidierungsmitteln Temperaturen von 700 °C bis 1300 °C ausgesetzt wird.

6. Bremssystem nach einem oder mehreren der Ansprüche 1 bis 5, wobei das verdichtete Fasermaterial einer Antioxidationsbehandlung unterzogen worden ist.

7. Bremssystem nach Anspruch 6, wobei die Antioxidationsbehandlung im Bilden einer Beschichtung auf den einzelnen Fasern oder Filamenten durch Aufbringen einer flüssigen Mischung oder einer pulverförmigen Mischung, die eine Al-, B-, Mg-, P-, Si- und/oder Zn-Verbindung enthält, wobei die flüssige Mischung als eine wässrige Lösung hergestellt ist, auf die Fasern oder Filamente durch Eintauchen darin oder durch Aufsprühen einer flüssigen Mischung oder durch Pulverablagerung in einem Fluidbett oder durch elektrostatische Pulverabscheidung besteht, wobei im Fall einer flüssigen Mischung oder Lösung die Flüssigkeit auf den Fasern oder Filamenten getrocknet wird und die flüssigkeits- oder pulverbeschichteten Fasern dann mit Wärme behandelt werden, um durch Glühen Glasphasen der auf die Fasern oder Filamente aufgebrachten Verbindungen zu bilden.

8. Bremssystem nach Anspruch 6, wobei die Antioxidationsbehandlung im Imprägnieren des verdichteten Fasermaterials mit wässrigen Lösungen, die eine Al-, B-, Mg-, P-, Si- und Zn-Verbindung enthält, und dann im Unterziehen des imprägnierten, verdichteten Fasermaterials einer Warmebehandlung besteht, um nach dem Trocknen und Glühen Glasphasen der Verbindungen zu bilden, die in der Imprägnierung vorhanden sind.

9. Bremssystem nach einem oder mehreren der Ansprüche 1 bis 8, wobei das verdichtete Fasermaterial nach dem Befestigen des Bremsbelagmaterials auf dem Bremsträger eingesetzt wird, wobei in das Bremsbelagmaterial eine Kerbe geschnitten ist, um dem Einsatz aus verdichtetem Fasermaterial Platz zu bieten.

10. Bremssystem nach Anspruch 9, wobei sich mindestens ein Rand der Kerbe innerhalb der ersten 30 % des Weges befindet, den ein fester Punkt auf der Oberfläche der Bremsscheibe über den Bremsbelag zurücklegt, wenn sich die Scheibe vorwärts dreht.

11. Bremssystem nach Anspruch 9, wobei die Breite der Kerbe zwischen 3 mm und 12 mm beträgt.

12. Bremssystem nach Anspruch 9, wobei die Kerbe in radialer Richtung verläuft, wenn der Bremsbelag in seiner Arbeitsposition befestigt ist, und der Radius durch die Rotationsachse der Bremsscheibe verläuft, wobei es außerdem möglich ist, die Kerbe derart auszurichten, dass sie einen Winkel zwischen -45° und +45° einschließt, wobei der Radius durch ihre Mitte verläuft.

13. Bremssystem nach einem oder mehreren der Ansprüche 1 bis 8, wobei der Einsatz in einem Formwerkzeug angeordnet und unter Anwendung von Druck und Wärme zusammen mit dem Material oder der Materialmischung gebildet wird, das/die den Bremsbelag bildet, geformt wird.

14. Bremssystem nach einem der vorhergehenden Ansprüche, wobei die Kohlefasern in den Einsätzen eine bevorzugte Ausrichtung aufweisen, die senkrecht zur Reibungsfläche des Bremsbelags oder zur Reibungsfläche der Bremsscheibe liegt, die mit dem Bremsbelag bei der Reibungskupplung zusammenwirkt.

15. Bremssystem nach Anspruch 1, wobei die Fasern im Einsatz aus verdichtetem Fasermaterial einen Durchmesser von 3 µm bis 12 µm aufweisen.

## Revendications

1. Système de frein comprenant un disque de frein et au moins une garniture de frein, **caractérisé en ce que** la garniture de frein comprend un insert formé d'un matériau densifié contenant des fibres et résistant à la température, insert qui s'étend radialement sur au moins 50 % de l'extension radiale de cette garniture de frein.

2. Système de frein selon la revendication 1, dans lequel le matériau fibreux densifié est constitué de fibres de carbone, de fibres de carbure de silicium, de fibres de nitrure de silicium, de fibres d'oxydes réfractaires sélectionnées dans le groupe composé des fibres d'oxyde d'aluminium et des fibres d'oxyde de zirconium, et aussi de fibres de verre à haut point de fusion et de fibres ou de trichites de métal.

3. Système de frein selon la revendication 1 ou la revendication 2, dans lequel le matériau fibreux densifié est densifié par des procédés textiles sélectionnés dans le groupe composé de la stratification, du tissage, du tressage, du tricotage et du feutrage, et de la formation de filé fondu non tissé à partir du bain fondu.

4. Système de frein selon la revendication 1 ou la revendication 2, dans lequel le matériau fibreux densifié est constitué d'un matériau thermoplastique ou thermodurcissable renforcé par des fibres.

5. Système de frein selon la revendication 4, dans lequel le matériau fibreux densifié est carbonisé en soumettant le matériau thermoplastique ou thermodurcissable renforcé par des fibres à des températures allant de 700°C à 1300°C avec exclusion d'agents oxydants.

6. Système de frein selon une ou plusieurs des revendications 1 à 5, dans lequel le matériau fibreux densifié a été soumis à un traitement antioxydant.

7. Système de frein selon la revendication 6, dans lequel le traitement antioxydant consiste en la formation d'un revêtement sur les fibres ou filaments individuels, en appliquant un mélange liquide ou un mélange pulvérulent contenant au moins un de composés de Al, B, Mg, P, Si et Zn, où le mélange liquide est produit sous forme de solution aqueuse, sur les fibres ou filaments en les trempant dans, ou en pulvérisant une solution liquide, ou par le dépôt de poudre dans un lit fluidisé ou par dépôt électrostatique de poudre, où, dans le cas d'un mélange ou d'une solution liquide, le liquide est séché sur les fibres ou filaments et les fibres revêtues de liquide ou de poudre sont ensuite traitées à chaud pour former des phases vitreuses des composés déposés sur les fibres ou filaments par revenu.

8. Système de frein selon la revendication 6, dans lequel le traitement antioxydant consiste à imprégner les matériaux fibreux densifiés avec des solutions aqueuses contenant au moins un de composés de Al, B, Mg, P, Si et Zn, et à soumettre ensuite les matériaux fibreux densifiés imprégnés à un traitement thermique pour former des phases vitreuses des composés présents dans l'agent d'imprégnation au cours du séchage et du revenu.

9. Système de frein selon une ou plusieurs des revendications 1 à 8, dans lequel le matériau fibreux densifié est inséré après la fixation du matériau de garniture de frein au plateau de support, dans lequel une rainure est taillée dans le matériau de garniture de frein pour y loger l'insert de matériau fibreux densifié.

10. Système de frein selon la revendication 9, dans lequel au moins un bord de la rainure est situé à l'intérieur des premiers 30 % du chemin qu'un point fixe sur la surface du disque de frein parcourt sur la garniture de frein lorsqu'il est en rotation avant.

11. Système de frein selon la revendication 9, dans lequel la largeur de la rainure est comprise entre 3 mm et 12 mm.

12. Système de frein selon la revendication 9, dans lequel la rainure se trouve en direction radiale, avec la garniture de frein fixée dans sa position de travail, et le rayon passant par l'axe de rotation du disque de frein. Il est également possible d'orienter la rainure de telle manière qu'elle forme un angle compris entre -45° et +45° avec le rayon passant par son centre.

13. Système de frein selon une ou plusieurs des revendications 1 à 8, dans lequel l'insert est placé dans un moule et formé avec le matériau ou le mélange de matériaux constituant la garniture de frein avec application de pression et de chaleur.

14. Système de frein selon l'une quelconque des revendications précédentes, dans lequel les fibres de carbone dans les inserts présentent une orientation préférentielle qui est perpendiculaire à la surface de friction de la garniture de frein, ou de la surface de friction de la garniture de frein qui coopère avec la garniture de frein dans le couplage à friction.

15. Système de frein selon la revendication 1, dans lequel, dans l'insert en matériau fibreux densifié, les fibres ont un diamètre allant de 3 µm à 12 µm.
